# EUROPÄISCHE PATENTSCHRIFT

(11) **EP 4 129 877 B1**
(45) Veröffentlichungstag und Bekanntmachung des Hinweises auf die Patenterteilung: **05.03.2025**
(21) Anmeldenummer: 22188438.0
(22) Anmeldetag: 03.08.2022
(51) Int. Cl.: B65H 55/02, B65H 63/08, A22C 11/12, G06V 10/70, G06V 20/00

(54) **VERFAHREN ZUM ERKENNEN DES INHALTS EINER FADENSPULE**
METHOD FOR DETECTING THE CONTENT OF A THREAD REEL
PROCÉDÉ DE DÉTECTION DU CONTENU D'UNE BOBINE DE FIL

(30) Priorität: 03.08.2021 DE 102021120106
(43) Veröffentlichungstag der Anmeldung: 08.02.2023
(73) Patentinhaber: Inotec GmbH Maschinenentwicklung und Vertrieb, 72770 Reutlingen (DE)
(72) Erfinder: DOMLATIL, Miroslav, 72766 Reutlingen (DE); DIGEL, Benjamin, 72820 Sonnenbühl (DE)
(74) Vertreter: Patentanwälte und Rechtsanwalt Weiß, Arat & Partner mbB

(56) Entgegenhaltungen:
- EP-A2- 0 979 795
- EP-B1- 3 169 160

## Beschreibung

### Technisches Gebiet

Die Erfindung betrifft ein Verfahren zum Erkennen des Inhalts einer Fadenspule, die von innen nach aussen abgewickelt wird.

### Stand der Technik

Im wesentlichen gibt es zwei grundsätzliche Arten von Fadenspulen, nämlich einmal diejenigen, bei denen auf einer Achse ein Faden von innen nach aussen aufgewickelt wird und zum anderen diejenigen, bei denen der Faden meist ohne Achse von innen nach aussen abgewickelt wird. Bei den Fadenspulen, bei denen der Faden auf einer Achse aufgewickelt wird, ist das Erkennen seines nahenden Endes einfach, da der Spulendurchmesser kontinuierlich abnimmt und zum Schluss nur noch eine geringe Menge an Faden auf der Achse festgestellt werden kann. Anders ist dies bei einer Fadenspule, bei welcher der Faden von innen nach aussen abgewickelt wird, da in der Regel das Ende des Fadens erst bei Erreichen der Abwicklung der äussersten Lage erkannt wird. Dann aber kann es bereits für einen geordneten Faden- bzw. Spulenwechsel zu spät sein oder es verbleibt zuviel Faden in der Restfadenspule, die meist von einer Hülle umgeben wird.

Im vorliegenden Fall geht es vor allem um das Erkennen der Abwicklung von Fadenspulen, die in der fleischverarbeitenden Industrie und hier insbesondere bei Abbindemaschinen von Würsten Anwendung finden, wobei der Faden die Aufgabe hat, die Enden von Würsten so zu verschliessen, dass kein Wurstbrät mehr nach aussen austritt. Bei einer neueren Entwicklung wird durch den Faden sogar vorhandenes Wurstbrät aus dem Abbindebereich zwischen zwei Abbindestellen herausgedrückt, wodurch den angestiegenen Hygieneanforderungen Rechnung getragen wird.

Bisher bekannte Abbindemaschinen kennen kein Verfahren zum Erkennen des Endes des Fadens bei einer Fadenspule. Bekannt sind nur sogenannte Portionszähler, die anzeigen, wieviel Portionen beispielsweise an Würsten abgebunden sind. Je nach dem, mit welcher Fadenlänge abgebunden wurde, wird nach einem Erfahrungswert nach einer bestimmten Anzahl von Portionen die Maschine angehalten und visuell im Spulenbehälter festgestellt, wieviel Faden noch vorhanden ist. Je nach dem Ergebnis wird die Maschine entweder wieder gestartet oder die Fadenspule gewechselt. Meist verbleibt aber ein erheblicher Rest an Faden ungenutzt, der entsorgt werden muss.

Lediglich die EP 3 169 160 B1 beschäftigt sich im weitesten Sinne mit dem Erkennen der Dicke der Fadenspule. Die Fadenspule bzw. deren Dicke wird von einem Lichtstrahl abgetastet, d.h., die Abtastung erfolgt am Boden der Fadenspule. Ein Fadenende kann damit nicht ermittelt werden, zumindest nicht mit einer ausreichenden Genauigkeit, da die Fäden relativ dünn sind und auch in unterschiedlichen Lagenstrukturen aufgebracht werden. Das bedeutet, dass, wenn der Faden zu Ende geht, dennoch auf dem Aussendurchmesser der Fadenspule noch zwei bis drei oder mehr Lagen des Fadens verbleiben, was aber wiederum eine Fadenrestmenge im Bereich von 15 m bis 40 m bedeutet.

Es verbleibt also bei der Schätzung des Bedieners, wieviel Wurstportionen noch hergestellt werden können. Schätzt er allerdings zuviele Portionen ein und läuft der Faden unkontrolliert aus, so ergibt dies erhebliche Maschinenprobleme, denn das Wurstbrät wird nicht abgebunden und tritt in die Maschine aus, was zu einer erheblichen Verschmutzung und zu einem Reinigungsaufwand für die Maschine führt. Vor allem auch bei sehr hochwertigen Wurstwaren, wie beispielsweise hochwertiger Salami, muss dieses ausgetretene Produkt entsorgt werden, da ein zweites Abfüllen eines hochwertigen Salamiproduktes nicht erlaubt ist.

### Aufgabe der Erfindung

Die Aufgabe der vorliegenden Erfindung ist es, die oben geschilderten Nachteile zu beseitigen und ein Verfahren bzw. eine Vorrichtung zu entwickeln, bei der das Ende eines Fadens auf einer Fadenspule erkannt wird und zwar bevor es ausläuft, aber auch bevor zuviel Faden unverbraucht verbleibt.

### Lösung der Aufgabe

Zur Lösung der Aufgabe führt, dass ein Bild oder ein Bildausschnitt der Fadenspule von aussen erstellt, ggf. mit einem gespeicherten Bild verglichen, Änderungen erkannt und aus den Änderung auf den Inhalt der Fadenspule geschlossen wird.

Im Gegensatz zum Stand der Technik, bei dem der Boden der Fadenspule beobachtet wird, erfolgt die Beobachtung der Fadenspule von der Seite her, d.h., radial von aussen auf den Aussenmantel der Fadenspule. Sobald durch eine künstliche Intelligenz eine Änderung des Bildes festgestellt wird, erfolgt der Rückschluss auf den Inhalt der Fadenspule. Bevorzugt sollte natürlich diese Änderung mit gespeicherten Bildern verglichen werden, damit nicht schon bei jedem Verrutschen des Fadens des Aussenmantels ein Rückschluss mit entsprechenden Reaktionen für beispielsweise eine Maschine erfolgt. Dies muss aber als eine verbesserte Ausführungsform des grundlegenden Gedankens der Erfindung verstanden werden, dass nämlich jede Änderung der Fadenspule auf ihrem Aussenmantel erkannt und auf den Inhalt der Fadenspule geschlossen wird.

Unter künstlicher Intelligenz wird im vorliegenden Fall verstanden, dass durch einen entsprechenden Prozessor die Auswertung der Bilder der Oberfläche der Spule erfolgt. Dabei kann die künstliche Intelligenz im Laufe der Anwendung lernen, dass nicht jedes Verrutschen des Fadens die Folge nach sich zieht, dass das Nahen eines Fadenendes angenommen wird. Bevorzugt wird dabei, die künstliche Intelligenz noch durch eine Vielzahl von hinterlegten Bildern mit Faden in einer Vielzahl von strukturierten oder nicht strukturierten Anordnungen zu unterstützen.

Bei einer zweiten Möglichkeit des erfindungsgemässen Verfahrens ist daran gedacht, die Ermittlung des nahenden Fadenendes quasi mathematisch zu erkennen. Hierzu wird die offene Fläche des Bildausschnitts, welcher beobachtet wird, ermittelt und berechnet. Sobald sich der Wert der offenen Fläche, insbesondere infolge der Abnahme der Fadenmenge, die durch den Bildausschnitt zu erkennen ist, verändert, wird darauf auf ein nahendes Fadenende geschlossen und entsprechende Aktionen veranlasst.

Von der Erfindung umfasst wird auch eine entsprechende Vorrichtung zur Durchführung des oben beschriebenen Verfahrens. Diese Vorrichtung besteht der Einfachheit halber aus einem Mittel zum Erkennen der Oberfläche des Aussenmantels einer Fadenspule bzw. eines Ausschnitts dieses Aussenmantels. Dieses Mittel wird in der Regel der Einfachheit halber eine Kamera sein. Sollten aber andere Mittel als geeignet erscheinen, so können auch diese gewählt werden.

Diese Kamera ist dann mit einer entsprechenden künstlichen Intelligenz zum Erkennung der Änderung der Bilder, welche die Kamera liefert, verbunden.

Wie oben bereits erwähnt, soll das erfindungsgemässe Verfahren bzw. die erfindungsgemässe Vorrichtung vor allem bei Maschinen in der fleischverarbeitenden Industrie Anwendung finden, hier insbesondere bei Abbindemaschinen. Beim Abbinden finden nur zwei Zustände statt, nämlich
- der Rotor mit dem Faden dreht, d.h., eine Abbindung findet statt und die Füllmaschine portioniert nicht;
- der Rotor mit dem Abbindefaden steht, d.h., es findet keine Abbindung statt, die Füllmaschine portioniert.

Wenn der Rotor steht, geschieht dies immer in der gleichen Position, in welcher die oben genannte Kamera die Aufnahme machen kann, wobei der Fadenbehälter auch immer in der gleichen Position ist.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in:
**Figur 1** eine perspektivische Ansicht eines Ausschnitts aus einer erfindungsgemässen Vorrichtung zum Abbinden von Würsten an einem Wurststrang; gemäss dem Stand der Technik nach der EP 3 169 160 B1
**Figur 2** eine schematische und blockschaltbildliche Darstellung einer erfindungsgemässen Vorrichtung zur Durchführung des erfindungsgemässen Verfahrens zum Erkennen des Inhalts einer Fadenspule;
**Figur 3** eine Draufsicht auf eine volle und eine leere Fadenspule;
**Figur 4** - **9** Aufnahmen von Fenstern eines erfindungsgemässen Käfigs mit Ausschnitten eines Aussenmantels der Fadenspule in verschiedenen Abwicklungslagen.

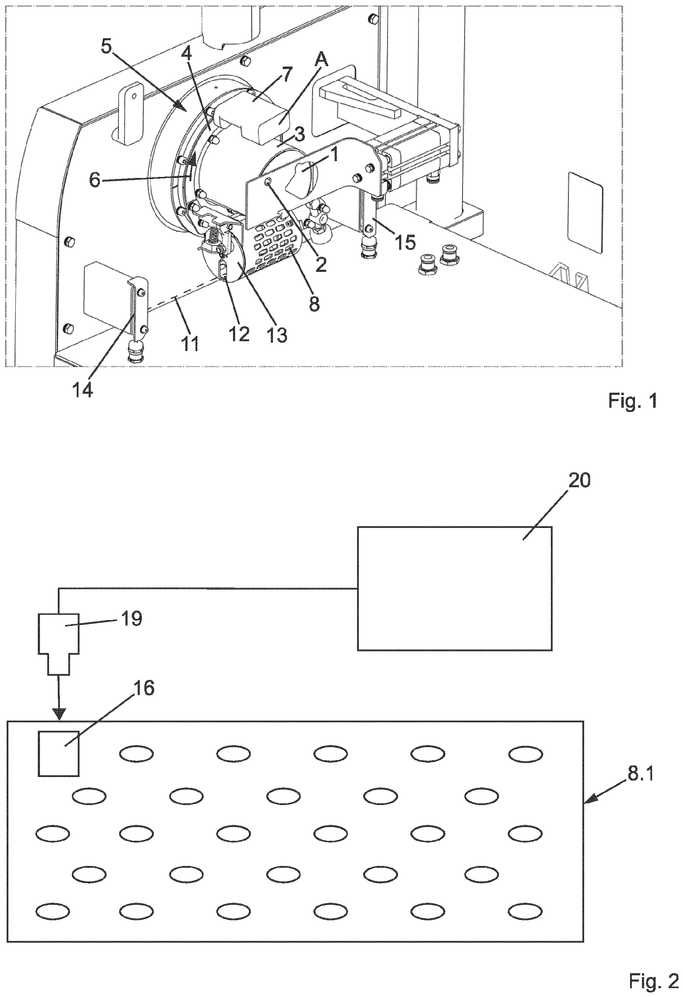

Entsprechend dem Stand der Technik werden hier nicht gezeigte Würste an einem Wurststrang gemäss Figur 1 durch eine Öffnung 1 eines dynamischen Teils 2 einer Verdrängerschere geführt und ferner durch einen tubusartigen Teil 3. Durch den dynamischen Teil 2 wird ein mit Wurstbrät gefüllter Darm im Zusammenwirken mit dem statischen Teil 3 an bestimmten Stellen eingeklemmt und abgebunden. Um den Wurststrang dreht ein Tragring 4, der sich über ein nicht näher gezeigtes Lager in einem maschinenfesten Lagergehäuse 5 der erfindungsgemässen Vorrichtung abstützt und der in diesem Lager in Drehrichtung 6 dreht.

Auf diesem Tragring 4 sitzt ein Gegengewicht 7 auf, welches zusammen mit dem Tragring 4 in Drehrichtung 6 dreht. Ferner befindet sich auf dem Tragring 4 gegenüber dem Gegengewicht 7 ein Käfig 8 zur Aufnahme einer Fadenspule. Eine äussere Lage der Fadenspule wird von einem in Figur 1 gestrichelt angedeuteten Lichtstrahl 11 durch eine Öffnung 12 in einem Deckel 13 des Käfigs 8 hindurch beobachtet. Dieser Lichtstrahl 11 kann entweder einer Verminderung eines Dicke der Fadenspule 9 folgen, oder aber es sind mehrere Lichtstrahlen 11 als Lichtvorhang vorgesehen, über die eine Abnahme der Dicke der Fadenspule ermittelt werden kann. Zum Aussenden des Lichtstrahls 11 ist ein Lichtsender 14 vorgesehen, zum Empfang der Lichtstrahlen ein Lichtempfänger 15.

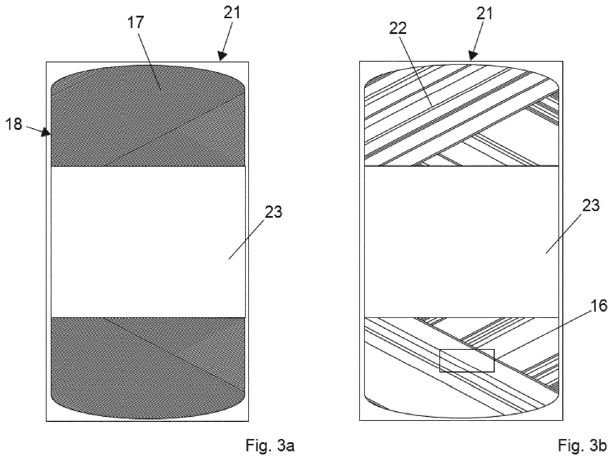

Gemäss der vorliegenden Erfindung nach Figur 2 ist dagegen in den Käfig 8.1 ein Fenster 16 eingeformt, durch welches ein Teil eines Aussenmantels 17 von in Figur 3 schematisch dargestellten Fadenspulen 18 erkennbar ist. Dieses Fenster 16 wird von einer Kamera 19 betrachtet, die mit einem Prozessor 20 verbunden ist, der eine künstliche Intelligenz beinhaltet.

Gemäss Figur 3a und 3b handelt es sich bei den Fadenspulen 18 um solche, die von innen nach aussen abgewickelt werden. Sie befinden sich meist in einer ggf. durchsichtigen Hülle 21. Durch diese Hülle 21 hindurch ist die Fadenwicklung insbesondere des Aussenmantels 17 der Fadenspule 18 erkennbar. Vor allem ist auch gemäss Figur 3b erkennbar, wenn der Faden 22 zu Ende geht, da dann der Aussenmantel eine ungeordnete bzw. veränderte Struktur annimmt.

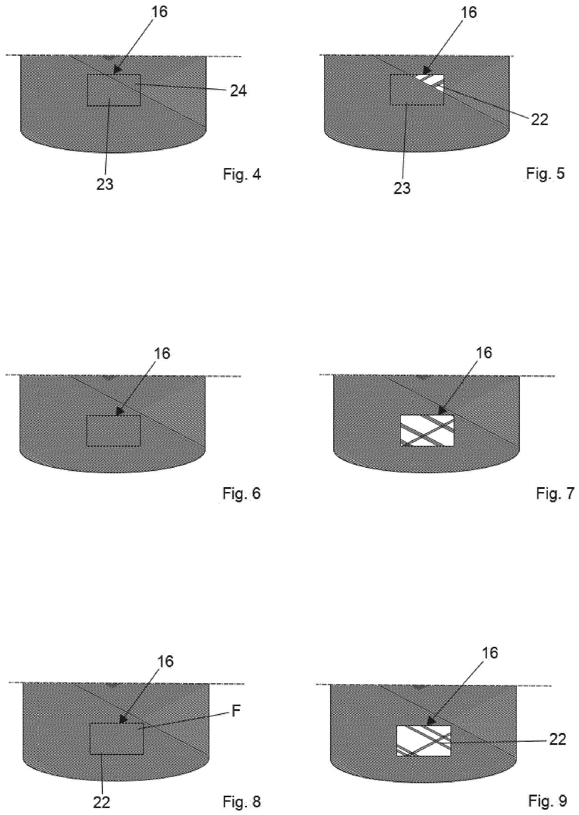

Ziel ist es, zu erkennen, wann der Faden 22 auf der Fadenspule 18 zu Ende geht, damit beispielsweise diese Fadenspule durch eine neue, volle Fadenspule ersetzt werden kann, ohne dass grosse Reststücke des Fadens übrig bleiben. Gemäss der vorliegenden Erfindung gibt es hierfür bevorzugt zwei Ansätze:
- Gemäss den Figuren 4 bis 7 betrachtet die Kamera eine sich ändernde Struktur des Aussenmantels der Fadenspule durch das Fenster 16. Die innere Struktur bleibt bis fast zum Ende der Fadenspule gleich, wie sie in Figur 4 angedeutet ist. In Figur 4 ist erkennbar, dass sowohl die äusserste Lage 23 als auch die nachfolgende innere Lage 24 intakt sind, so dass daraus über die künstliche Intelligenz in dem Prozessor 20 geschlossen werden kann, dass die Fadenspule noch nicht zum Wechseln verbraucht ist.

In Figur 5 dagegen erkennt die künstliche Intelligenz in dem Prozessor 20 über die Kamera 19, dass zwar die äusserste Lage 23 noch intakt ist, dass aber von der nächst inneren Lage 24 nur noch wenig Faden 22 zu erkennen ist. Die künstliche Intelligenz vergleicht somit das Bild von Figur 5 mit demjenigen von Figur 4 und stellt fest, dass von der Fadenspule nur noch die äusserste Lage 23 des Aussenmantels vorhanden ist, was bedeutet, dass nur noch wenige Meter Faden zur Verfügung stehen und deshalb die Fadenspule gewechselt werden sollte.

Gemäss dem Ausführungsbeispiel nach Figur 6 erscheint in dem Fenster 16 eine geschlossene Fadenstruktur der äusseren Lage des Aussenmantels der Spule, wie dies bei einer anderen handelsüblichen Fadenspule der Fall ist. Hier erkennt die künstliche Intelligenz in dem Prozessor 20 über die Kamera 19 gemäss Figur 7, dass die Anzahl der Fäden der äussersten Lage abnimmt und beispielsweise nur ein Faden der nächst inneren Lage zu erkennen ist. Auch daraus kann die künstliche Intelligenz wiederum auf die Länge des noch vorhandenen Fadens auf der Fadenspule schliessen.
- Eine zweite Möglichkeit der Ermittlung des Fadens auf dem Aussenmantel der Fadenspule wird in den Figuren 8 und 9 gezeigt. Hier wird in dem Fenster 16 das Hauptaugenmerk darauf gerichtet, wieviel Fläche F des Fensters 16 von dem Faden 22 überdeckt wird. Ist die ganze Fläche F überdeckt, befindet sich noch ausreichend Faden auf der Fadenspule. Unterschreitet die überdeckte Fläche F einen vorgegebenen Schwellwert, der in der künstlichen Intelligenz des Prozessors 20 gespeichert ist, schliesst diese künstliche Intelligenz darauf, dass nur noch eine geringe Fadenlänge zur Verfügung steht, so dass die Fadenspule gewechselt werden sollte.

### Bezugszeichenliste

| | |
|---|---|
| 1 | Öffnung |
| 2 | dynamischer Teil |
| 3 | statischer Teil |
| 4 | Tragring |
| 5 | Lagergehäuse |
| 6 | Drehrichtung |
| 7 | Gegengewicht |
| 8 | Käfig |
| 9 | Fadenspule |
| 10 | Äussere Lage |
| 11 | Lichtstrahl |
| 12 | Öffnung |
| 13 | Deckel |
| 14 | Lichtsender |
| 15 | Lichtempfänger |
| 16 | Fenster |
| 17 | Aussenmantel |
| 18 | Fadenspule |
| 19 | Kamera |
| 20 | Prozessor |
| 21 | Hülle |
| 22 | Faden |
| 23 | Beschriftung |

## Patentansprüche

1. Verfahren zum Erkennen des Inhaltes einer Fadenspule (18), die von innen nach aussen abgewickelt wird,
**dadurch gekennzeichnet,**
**dass** ein Bild oder ein Bildausschnitt der Fadenspule (18) von außen erstellt, gegebenenfalls mit einem gespeicherten Bild verglichen, Änderungen erkannt und aus den Änderungen auf den Inhalt der Fadenspule (18) geschlossen wird.

2. Verfahren zum Erkennen des Inhalts einer Fadenspule (18), die von innen nach aussen abgewickelt wird, **dadurch gekennzeichnet, dass** ein Bild oder ein Bildausschnitt der Fadenspule (18) von aussen erstellt, ein vom Faden (22) überdeckter Anteil des Bildes oder Bildausschnitt ermittelt und aus Änderungen auf den Inhalt der Fadenspule (18) geschlossen wird.

3. Verfahren nach Anspruch 1 oder 2, **dadurch gekennzeichnet, dass** die Erzeugung des Bildes oder des Bildausschnitts radial zu einer gedachten Spulenachse von aussen erfolgt.

4. Verfahren nach wenigstens einem der vorhergehenden Ansprüche, **dadurch gekennzeichnet, dass** bei Feststellung der Unterschreitung eines vorbestimmten Schwellwerts des Inhalts der Fadenspule (18) diese durch eine neue ersetzt wird.

5. Vorrichtung zum Erkennen des Inhalts einer Fadenspule (18), die von innen nach aussen abwickelbar ist, wobei ein Faden (22) einen Außenmantel für die Fadenspule bildet, **dadurch gekennzeichnet, dass** dem Außenmantel (17) ein Mittel zur Erkennung einer Änderung des Außenmantels (17) zugeordnet ist.

6. Vorrichtung nach Anspruch 5, **dadurch gekennzeichnet, dass** das Mittel zur Erkennung einer Änderung des Außenmantels (17) der Fadenspule (18) eine Kamera (19) ist.

7. Vorrichtung nach Anspruch 5 oder 6, **dadurch gekennzeichnet, dass** dem Mittel zur Erkennung einer Änderung des Außenmantels (17) der Fadenspule (18) eine künstliche Intelligenz zur Erkennung dieser Änderung zugeordnet ist.

8. Vorrichtung nach wenigstens einem der Ansprüche 5 bis 7, **dadurch gekennzeichnet, dass** sich die Fadenspule (18) in einem Käfig (8.1) befindet, der ein Fenster (16) für die Betrachtung des Außenmantels (17) der Fadenspule (18) durch das Mittel zur Erkennung einer Änderung des Außenmantels (17) aufweist.

9. Verwendung eines Verfahrens gemäß wenigstens einem der Ansprüchen 1 bis 4 bzw. einer Vorrichtung gemäß wenigstens einem der Ansprüchen 5 bis 8 bei der Herstellung eines Produktes in der fleischverarbeitenden Industrie, insbesondere bei der Herstellung von Würsten.

10. Verwendung eines Verfahrens gemäß wenigstens einem der Ansprüchen 1 bis 4 bzw. einer Vorrichtung gemäß wenigstens einem der Ansprüchen 5 bis 8 bei der Herstellung von Würsten in Abbindemaschinen.

## Claims

1. Method for determining the content of a thread spool (18) which is unwound from the inside to the outside
**characterized in**
**in that** an image or an image section of the thread spool (18) is produced from the outside, if necessary, compared with a stored image, changes are recognized and the content of the thread spool (18) is deduced from the changes.

2. Method for determining the content of a thread bobbin (18) which is unwound from the inside to the outside, **characterized in that** an image or an image section of the thread spool (18) is produced from the outside, a portion of the image or image section covered by the thread (22) is determined and the content of the thread spool (18) is deduced from changes.

3. Method according to claim 1 or 2, **characterized in that** the image or the image section is generated radially to an imaginary spool axis from the outside.

4. Method according to at least one of the preceding claims, **characterized in that** when it is determined that the content of the thread spool (18) has fallen below a predetermined threshold value, it is replaced by a new one.

5. Device for determining the content of a thread spool (18) which can be unwound from the inside to the outside, a thread (22) forming an outer sheath for the thread spool, **characterized in that** a means for determining a change in the outer sheath (17) is associated with the outer sheath (17).

6. Device according to claim 5, **characterized in that** the means for determining a change in the outer sheath (17) of the thread spool (18) is a camera (19).

7. Device according to claim 5 or 6, **characterized in that** the means for determining a change in the outer sheath (17) of the thread spool (18) is assigned an artificial intelligence for determining this change.

8. Device according to at least one of claims 5 to 7, **characterized in that** the thread spool (18) is located in a cage (8.1) which has a window (16) for viewing the outer sheath (17) of the thread spool (18) by the means for determining a change in the outer sheath (17).

9. Use of a method according to at least one of claims 1 to 4 or of a device according to at least one of claims 5 to 8 in the manufacture of a product in the meat-processing industry, in particular in the manufacture of sausages.

10. Use of a method according to at least one of claims 1 to 4 or a device according to at least one of claims 5 to 8 in the production of sausages in tying machines.

## Revendications

1. Procédé permettant de détecter le contenu d'une bobine de fil (18) qui est déroulée de l'intérieur vers l'extérieur,
**caractérisé en ce**
**qu'**une image ou une section d'image de la bobine de fil (18) est créée depuis l'extérieur et est éventuellement comparée à une image mémorisée, des modifications sont détectées et le contenu de la bobine de fil (18) est déduit à partir des modifications.

2. Procédé permettant de détecter le contenu d'une bobine de fil (18) qui est déroulée de l'intérieur vers l'extérieur, **caractérisé en ce qu'**une image ou une section d'image de la bobine de fil (18) est créée depuis l'extérieur, une partie recouverte par le fil (22) de l'image ou de la section d'image est déterminée et le contenu de la bobine de fil (18) est déduit à partir des modifications.

3. Procédé selon la revendication 1 ou 2, **caractérisé en ce que** la génération de l'image ou de la section d'image est effectuée depuis l'extérieur radialement par rapport à un axe de bobine imaginaire.

4. Procédé selon au moins l'une des revendications précédentes, **caractérisé en ce que,** lorsqu'il est constaté que le contenu de la bobine de fil (18) est inférieur à un seuil prédéfini, ladite bobine de fil est remplacée par une nouvelle bobine de fil.

5. Dispositif permettant de détecter le contenu d'une bobine de fil (18) qui peut être déroulée de l'intérieur vers l'extérieur, dans lequel un fil (22) forme une enveloppe extérieure pour la bobine de fil, **caractérisé en ce qu'**un moyen permettant de détecter une modification de l'enveloppe extérieure (17) est associé à l'enveloppe extérieure (17).

6. Dispositif selon la revendication 5, **caractérisé en ce que** le moyen permettant de détecter une modification de l'enveloppe extérieure (17) de la bobine de fil (18) est une caméra (19).

7. Dispositif selon la revendication 5 ou 6, **caractérisé en ce que** le moyen permettant de détecter une modification de l'enveloppe extérieure (17) de la bobine de fil (18) est associé à une intelligence artificielle permettant de détecter ladite modification.

8. Dispositif selon au moins l'une des revendications 5 à 7,
**caractérisé en ce que** la bobine de fil (18) se trouve dans une cage (8.1) qui présente une fenêtre (16) pour l'observation de l'enveloppe extérieure (17) de la bobine de fil (18) par le moyen permettant de détecter une modification de l'enveloppe extérieure (17).

9. Utilisation d'un procédé selon au moins l'une des revendications 1 à 4, ou d'un dispositif selon au moins l'une des revendications 5 à 8, dans la fabrication d'un produit dans l'industrie de transformation de la viande, en particulier dans la fabrication de saucisses.

10. Utilisation d'un procédé selon au moins l'une des revendications 1 à 4, ou d'un dispositif selon au moins l'une des revendications 5 à 8, dans la fabrication de saucisses dans des ficeleuses.
